# EUROPEAN PATENT APPLICATION

(11) **EP 1 894 778 A1**
(43) Date of publication of application: **05.03.2008**
(21) Application number: 06465014.6
(22) Date of filing: 04.09.2006
(51) Int. Cl.: B60Q 7/00

(54) **Warning triangle**

(71) Applicant: SUWARY SA, 95-200 Pabianice (PL)
(72) Inventor: Napieracz, Zbigniew, 95-200 Pabianice (PL)
(74) Representative: Rumpel, Alicja

(57) **Abstract**

The road warning triangle with arms provided with reflective elements, in which at least one surface of such elements has properties of light refraction, has one fixed horizontal arm (2) with the fastening profiles (8) situated on both its sides, where two moving arms (1) and four legs (9) of the triangle are fixed rotationally with the application of the known methods; two legs are mounted on each end of the horizontal arm (2), on each side of it and they are put into the openings - pockets (13) made in the profiles (8).

The openings-pockets (13) are situated in a cross-shaped way, at different heights.

The openings-pockets (13) are situated on one plane in such a way, that extensions of longitudinal axes of the bar legs (9) are intersecting at an angle close to right angle.
Horizontal arm (2) of the triangle base is provided with at least one hanger (21).
The stiffening profile (27) is placed in parallel to the horizontal arm (2), which fits tight to it. The stiffening profile (27) is placed in parallel to the horizontal arm (2), which fits tight to it. Moving arms (1) are fixed rotationally to the horizontal arm (2) with the application of the rivet joint (5). On planes of the stiffening arms 1, the reflective surfaces 3 are fixed in a permanent way as well as fluorescent fabric 4 is fastened vertically. The fabric is fastened in points which correspond to axes of rotation of the moving arms - the riveted joints 5 and the push-on joint with a clip 22 to fasten the above to one of the moving arm 1 are used.

## Description

The subject-matter of the invention is the warning triangle to be used in road vehicles in order to inform other road users about possible occurrence of any dangerous situation.

Equipment of vehicles earmarked for informing and warning other road users about occurring dangers is produced as an element or equipment, electrically powered or not powered, which has a form of reflective surfaces constituting a permanent part of a vehicle or its auxiliary equipment set up on the vehicle itself or on the road. In some legal regulations referring to road traffic on highways, the required equipment of the said kind are, among others, warning triangles. The detailed requirements, such warning triangles should comply with, are determined in the EEC UNO Rules No 27. For practical reasons, such triangles were redesigned towards folded equipment provided with different kinds of warning surfaces and stabilized in a different way on the ground's surface.

According to the patent description PL 341016, the road warning triangle has been described, which is to be set up behind the vehicle at a certain distance from it. Reflective arms are folded and mounted on a rigid, steel plate stiffening the horizontal arm. At the ends of this arm there are plastic profiles, which form a fastening for unfolded bar legs of the triangle. These legs are taken aside in a horizontal plane and in a position of its maximal spacing, the bars are being blocked in small pockets. In similar solutions, a change in shape of bar legs with a simultaneous maintenance of both direction and way of their unfolding to reach working position, can be noticed.

According to the patent description DE 101 58 172, the road warning triangle has been described, in which bar legs have been bent slightly in a close vicinity to fixing points in order to improve stability of the entire assembly. Similarly to the solution as described previously, the legs are being blocked in working position, and respective ends of reflective surfaces are lifted upwards and joined together. Shapes of bar legs are different; they can be bent several times in order to better expose warning planes or in order to lower the centre of gravity of the assembly.

According to the patent description EP 1 481 849, the bars were bent directly behind the fixing point and at some distance from it; respectively, the shape of fixing elements causes displacement of free ends of bar legs down resulting in lifting of reflective surfaces upwards and in their better exposition.

In order to increase resistance of the device, the elements which fasten legs to triangle arms are made of other materials, e.g. of steel. Such fixing element can be found in the patent description DE 100 54 656. Also, the way of unfolding the legs which stabilizes the triangle, was changed accordingly. They are now taken aside in a vertical plane whereas their resting plane is parallel to reflective arms being lifted upwards.

The road warning triangle according to the invention has arms provided with reflective elements and at least one surface of such elements has properties of light refraction. Preferably, these arms should refract and reflect luminous fluxes with their entire volume or the entire surface of arms is covered with a substance or coating characterized by the above properties. Also preferably, the additional plane should be applied, which is spread within the arms with fluorescent properties. Moving arms are mounted rotationally on a horizontal arm with screws (in another version - with rivets) what makes it impossible to easily disconnect triangle elements and , at the same time, ensures free rotation of points of moving arms on the joining axis. In one of versions, profiles to fasten triangle legs are mounted on the horizontal arm by means of the same joint. In the other version, joining of the fastening profiles with the horizontal arm of the triangle is made by means of a snap joint. Preferably, the horizontal arms and the triangle base as well as the profiles should be made of light plastic which is , at the same time, resistant to mechanical damages. Of course, a minimal mass necessary to ensure stability of an unfolded device should be taken into consideration. The assembly of triangle elements can be additionally stiffened by joining both profiles under the horizontal arm of the base by means of a bar made of steel, another metal or plastic. The lower arm of the triangle can be also stiffened with at least one stiffening rib made uniformly with the arm, preferably along its entire length or with a group of ribs formed as a result of "slimming" of the triangle base in the process of casting. Preferably, the number of ribs could be higher e.g. 3, what ensures better stiffness. This is also when such ribs are made as uniform and homogenous structure containing the triangle arm or when its inside space is filled with loading or stiffening substance, placed lengthwise the entire horizontal arm. Preferably, the horizontal arm of the triangle base is equipped with at least one hanger to protect the bar legs of the triangle against their automatic falling down from folded position. It can be made as uniform element along with the horizontal arm of the base or as the element joined with a snap fastener or any other type of joint e.g. riveted joint. In another version of the triangle base, a hanger can be fastened to the bar leg and in its folded position this will stabilize the bar leg coming out from the other, opposite fastening profile as a push-on joint. In another version of making, a hanger for bar legs of triangle can be made as suspensions forming a kind of shelves, which are open from a side of outer surfaces of the triangle. Thanks to this, unfolding of legs is impossible because of the force of gravity, which pushes the bar leg of the triangle into the shelves of such suspension. In the next version of making, automatic unfolding of the legs is prevented thanks to the force of elasticity of material, from which the legs are made of. This force of elasticity pushes the legs into the side surfaces of the hanger whereas open spaces of the hanger are available from its inside i.e. from a side of longitudinal symmetry axis of the triangle. If in a given example of making profiles, which fasten the bar legs of the triangle, are joined with the additional stiffening bar, then such stiffening bar passes also through the hanger to the bar legs of the triangle, stiffening the whole construction and, first of all, preventing profiles, which are situated on the edges and which fasten the legs, from their rotating. The connection between arms of the triangle and the fastening profile is preferably completed by means of a push-on or a snap joint, where profiles are stabilized with fragments of the horizontal arm of the base mating with notches formed on its surface and with the additional rib placed on the edge of the horizontal arm of the base. According to the other example of making, the profiles can be joined with the horizontal arm of the base by means of riveting of this section of the fastening profile, which sticks out upwards, to the horizontal arm of the base. Simultaneously, the rivet itself is then forming axis of rotation of the reflective arms in relation to each other and to the base of the triangle. In the lower part of profiles, openings are located preferably horizontally or alternately (in a cross - shaped way), but at different heights. Appropriately bent ends of the bar legs are introduced into such openings. Preferably, these ends are additionally protected against their slipping out from the fastening profiles by usage of relevant snap rings or by flattening of the bar fragment. Such flattening can be performed on the ending of the bar or on this section of the bar, which is visible in the opening made in the base of the fastening profile. In another version of making, the bar is wedged into the opening of the profile by means of a local offset matching its shape and mating with a projection made in the fastening profile. In another example of making, the fastening profiles are provided with openings for the bar legs situated at the same height in the fastening profile in such a way, that extensions of the axis of this part of the bar leg, which is bent and fastened to the profile, intersect at an angle close to right angle and fragments of the bar legs of the triangle are fastened to the profile not intersecting each other what makes it possible that the legs can move in the same plane as in the case of alternating (cross-shaped) location. The bar legs of the warning triangle are deformed in at least three points, at some distance from the fastening profiles. The way of bending must allow the legs to cross under the reflective panels in order to decrease thickness of the triangle after its folding as well as should ensure co-operation with the hanger for these legs. Bending of the bar in its ending upwards adjusts the distance between the lower edge of the triangle base and the level of the ground during work being performed in the working position. Lengths of the legs are adjusted in a way to ensure their separated opening and closing. Preferably, the bends are made close to the centre of the bar length but on the side of its free end. Thanks to alternating (cross-shaped) setting of ends of the fastened bars, which coincides with diagonals of the base of the fastening profiles as well as due to appropriate bending of these ends, during unfolding of the triangle legs free ends are moving vertically down on the triangle plane and then, they are taken aside on the plane which is perpendicular to the triangle plane. Such displacement ensures better stability of the set of elements of unfolded triangle and prevents the bar legs from folding and the triangle itself from falling down due to incidental knocking or a gust of wind. The legs in unfolded position are stabilized with deadweight of the triangle itself and this is why their incidental turning from working position into folded or partly folded position is impossible. When the triangle is folded, mutual setting of its elements results in the necessity to have only a small area to keep it and its easy preparation to work allows its usage by every road user.

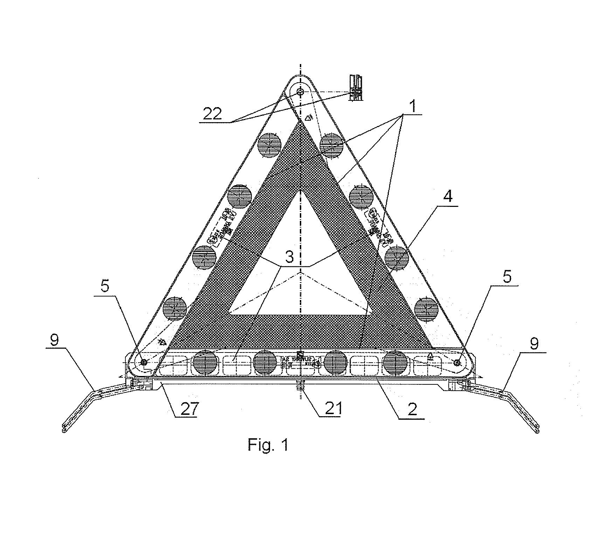

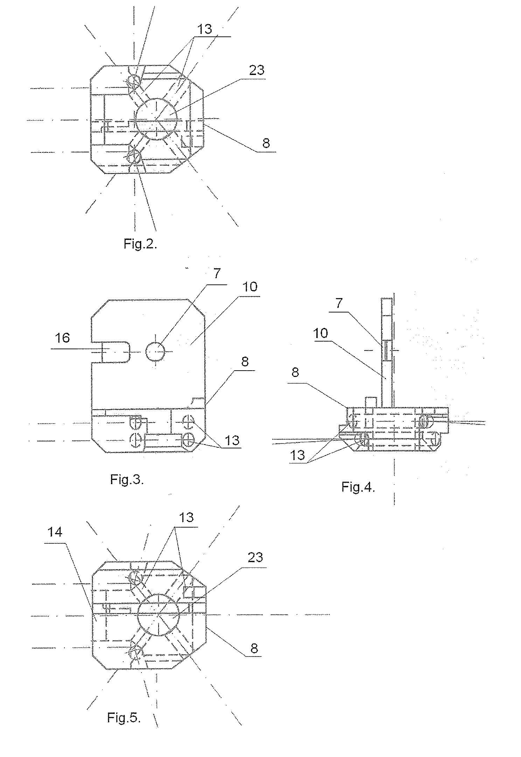

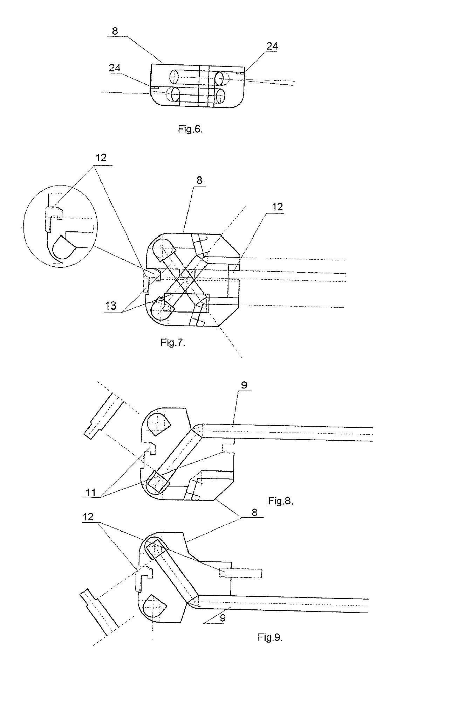

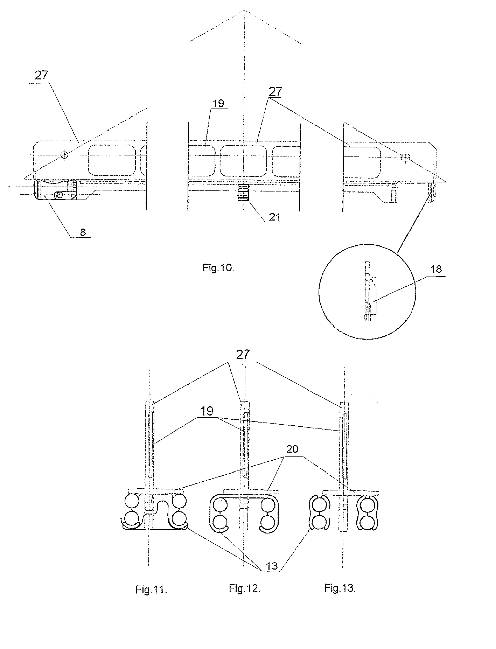

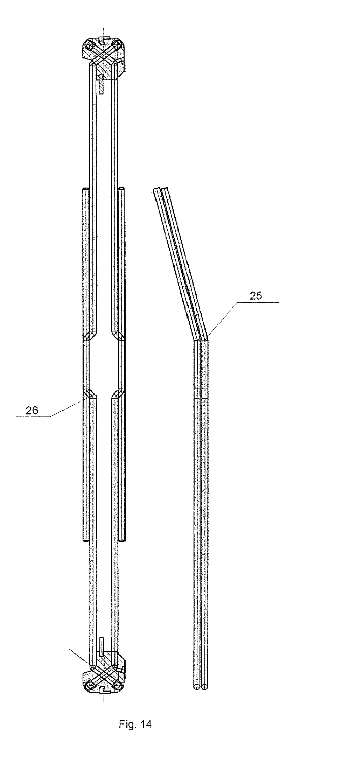

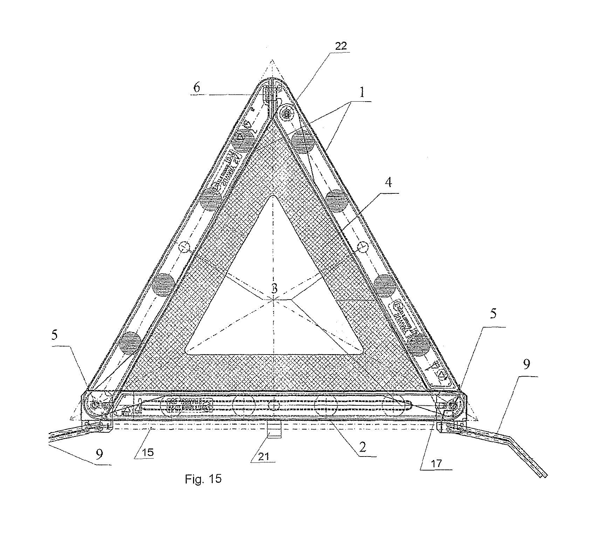

The subject-matter of the invention has been presented in figures, where: Fig.1 presents a view of unfolded warning triangle, Fig. 2,3,4,5 show the first version of the fastening profile: Fig. 2 - presents the fastening profile in a bottom view, Fig. 3 - presents the fastening profile in a side view, Fig.4 - shows the fastening profile in a front view, Fig. 5 presents the fastening profile in a top view, Fig. 6,7,8,9 present the second version of making of the fastening profiles. Fig. 6 shows the fastening profile in a side view, Fig. 7 - shows the fastening profile in a bottom view, Fig. 8 and 9 - show a run of the bar legs of the triangle within the fastening profiles. Fig. 10 - shows the base of the warning triangle, whereas Fig. 11,12 and 13 show three versions of hangers for the bar legs of the triangle. Shapes of the bar legs of the warning triangle and their run within the fastening profiles are presented in Fig. 14. Fig. 15 presents the triangle in accordance with an example of making with the stiffening bar placed under the horizontal arm.

### Example I

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with riveted joints 5 allowing axial rotation of the arms and with the working snap fastener 6. The axis of the riveted joint 5 coincides with the axes of openings 7 in the fastening profiles 8, in which the bar legs 9 are also fastened to in a movable way. The fastening profile 8 is provided with the ribs 10, which are situated upwards. The structure of the fastening profile 8 is provided with the openings - pockets 13 situated in a cross-shaped way but at a different height, where the ends of the bar legs 9 are put into. From the inside part of the horizontal arm 2, the fastening profile 8 is provided with the notch 16 mating with the blocking pin 17, making it impossible to change position of the fastening profile during unfolding of the triangle base. Resistance to deformations resulting from vibrations of the ground is ensured by the ribbing 19 incorporated into the structure of the horizontal arm, which is performed in a form of recess made in the structure of the horizontal arm 2 of the base. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from inside, respectively using to this end the force of gravity acting on the bar legs 9.

There are the openings -pockets 13 in the structure of the fastening profile 8, which are placed in a cross-shaped way but at a different height and where the ends of the bar legs 9 are put into. In the same structure there is also the opening 14, which forms a pocket for the stiffening bar 15.

During preparation of the triangle to work, free ends of the arms 1 are lifted upwards and joined together with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example II

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joint 5 coincides with the axes of openings 7 in the fastening profiles 8, in which the bar legs 9 are also fastened to in a movable way. From the inside part of the horizontal arm 2, the fastening profile 8 is provided with the notch 16 mating with the blocking pin 17, making it impossible to change position of the fastening profile during unfolding of the triangle base. Resistance to deformations resulting from vibrations of the ground is ensured by the ribbing 19 incorporated into the structure of the horizontal arm 2, which is performed in a form of recess made in its structure. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from outside, respectively using to this end a force of elasticity characteristic of the material, from which the bar legs 9 are made of.

There are the openings -pockets 13 in the structure of the fastening profile 8, which are placed in a cross-shaped way but at a different height and where the ends of the bar legs 9 are put into. In the same structure there is also the opening 14, which forms a pocket for the stiffening bar 15.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example III

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joint 5 coincides with the axes of the openings 7 in the fastening profiles 8, in which the bar legs 9 are also fastened to in a movable way. From the inside part of the horizontal arm 2, the fastening profile 8 is provided with the notch 16 mating with the blocking pin 17, making it impossible to change position of the fastening profile during unfolding of the triangle base.

Resistance to deformations resulting from vibrations of the ground is ensured by the ribbing 19 incorporated into the structure of the horizontal arm 2, which is performed in a form of recess made in its structure and/or additional longitudinal rib 20.

The hanger 21 has a form of a double clamping ring, which is slid over one of the bar legs 9 and stabilizing this bar leg 9, which is situated below by means of its pushing into the second ring of the double clamping ring of the hanger 21.

There are the openings - pockets 13 in the structure of the fastening profile 8, which are placed in a cross-shaped way but at a different height and where the ends of the bar legs 9 are put into. In the same structure there is also the opening 14, which forms a pocket for the stiffening bar 15.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example IV

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joints 5 is situated above the fastening profiles 8, in which the bar legs 9 are also fastened to in a movable way. From the inside part of the horizontal arm 2, the fastening profile 8 is provided with the notches 11 mating with the blocking pins 12, which are a part of the horizontal arm 2 and making it impossible to change position of the fastening profile during unfolding of the triangle base. The ribbing 19 incorporated into the structure of the horizontal arm 2 is performed in a form of recesses made in its structure. In the central part of the horizontal arm of the base 2 there is the hanger 21, which prevents the bar legs 9 from their automatic falling down from the folded position.

The hanger 21 has a form of a double clamping ring, which is slid over one of the bar legs 9 and stabilizing this bar leg 9, which is situated below by means of its pushing into the second ring of the double clamping ring of the hanger 21.

From the inside part of the horizontal arm 2, any movement of the fastening profile 8 is being blocked by elements of the horizontal arm 12 of the triangle base 2 whereas from the outside part of the horizontal arm 2 contour - by the second element 12 and the rib 18 situated on the edge of the horizontal arm of the triangle base 2.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example V

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joints 5 is situated above the fastening profiles 8, in which the bar legs 9 are also fastened to in a movable way. From the inside part of the horizontal arm 2, the fastening profile 8 is provided with the notches 11 mating with the blocking pins 12, which are a part of the horizontal arm 2 and making it impossible to change position of the fastening profile during unfolding of the triangle base.

Resistance to deformations resulting from vibrations of the ground is ensured by the ribbing 19 incorporated into the structure of the horizontal arm 2, which is performed in a form of recesses made in its structure. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from outside, respectively using to this end a force of elasticity characteristic of the material, from which the bar legs 9 are made of.

From the inside part of the horizontal arm 2, any movement of the fastening profile 8 is being blocked by elements of the horizontal arm 12 of the triangle base 2 whereas from the outside part of the horizontal arm 2 contour - by the second element 12 and the rib 18 situated on the edge of the horizontal arm of the triangle base 2.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example VI

The warning triangle according to the invention is composed of the stiffening arms 1 and the horizontal arm of the triangle base 2. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joints 5 is situated above the fastening profiles 8, in which the bar legs 9 are also fastened to in a movable way. From the inside part of the horizontal arm 2, the fastening profile 8 is provided with the notches 11 mating with the blocking pins 12, which are a part of the horizontal arm 2 and making it impossible to change position of the fastening profile during unfolding of the triangle base.

Resistance to deformations resulting from vibrations of the ground is ensured by ribbing 19 incorporated into the structure of the horizontal arm 2, which is performed in a form of recesses made in its structure. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from outside, respectively using to this end the force of gravity acting on the bar legs 9.

From the inside part of the horizontal arm 2, any movement of the fastening profile 8 is being blocked by elements of the horizontal arm 12 of the triangle base 2 whereas from the outside part of the horizontal arm 2 contour - by the second element 12 and the rib 18 situated on the edge of the horizontal arm of the triangle base 2.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example VII

The warning triangle according to the invention is composed of the stiffening arms 1 and the horizontal arm of the triangle base 2 as well as the stiffening profile 27. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joints 5 is situated above the fastening profiles 8, in which the bar legs 9 are also fastened to in a movable and cross-shaped way. From the inside part of the stiffening profile 27, the fastening profile 8 is provided with the notches 11 mating with the blocking pins 12, which are a part of the stiffening profile 27 and making it impossible to change position of the fastening profile during unfolding of the triangle base.

Resistance to deformations resulting from vibrations of the ground is ensured by the stiffening profile 27 which is parallel to the horizontal arm 2 and which includes the ribbing 19 performed in a form of recesses made in its structure as well as the rigid rib 20 situated lengthwise the entire stiffening profile 27. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from inside, respectively using to this end the force of gravity acting on the bar legs.

From the inside part of both the horizontal arm 2 and the stiffening profile 27, any movement of the fastening profile 8 is being blocked by elements of the horizontal arm 12 of the triangle base 2 whereas from the outside part of the horizontal arm 2 contour - by the second element 12 and the rib 18 situated on the edge of the horizontal arm of the stiffening profile 27.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - the riveted joints 5 and the push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

### Example VIII

The warning triangle according to the invention is composed of the stiffening arms 1 and the horizontal arm of the triangle base 2 as well as the stiffening profile 27. On planes of the stiffening arms 1, the reflective surfaces 3 are fixed in a permanent way as well as fluorescent fabric 4 is fastened vertically. The arms are joined one with each other with the riveted joints 5 allowing axial rotation of the arms and with the working snap fastener 6. The axis of the riveted joints 5 is situated above the fastening profiles 8, in which the bar legs 9 are also fastened to in a movable way by mounting them in the pockets 13 so that the fastened ends of the bar legs are situated on one plane and that they are shifted one against the other in such a way that extensions of their longitudinal axes are intersecting at an angle close to right angle. From the inside part of the stiffening profile 27, the fastening profile 8 is provided with the notches 11 mating with the blocking pins 12, which are a part of the stiffening profile 27 and making it impossible to change position of the fastening profile during unfolding of the triangle base.

Resistance to deformations resulting from vibrations of the ground is ensured by the stiffening profile 27 which is parallel to the horizontal arm 2 and which includes the ribbing 19 performed in a form of recesses made in its structure as well as the rigid rib 20 situated lengthwise the entire stiffening profile 27. In the central part of the horizontal arm of the base 2 there is the hanger 21, which prevents the bar legs 9 from their automatic falling down from the folded position.

The hanger 21 and the horizontal arm of the base 2 form a uniform structure and stabilizes the bar legs from inside, respectively using to this end a force of gravity acting on the bar legs.

From the inside part of both the horizontal arm 2 and the stiffening profile 27, any movement of the fastening profile 8 is being blocked by elements of the horizontal arm 12 of the triangle base 2 whereas from the outside part of the horizontal arm 2 contour - by the second element 12 and the rib 18 situated on the edge of the horizontal arm of the stiffening profile 27.

During preparation of the triangle to work, free ends of the arms 1 are lifted upwards and joined with the working snap fastener 6. Simultaneously with lifting the arms upwards, the fluorescent fabric 4 spread between the moving arms 1 and the horizontal arm of the base 2 is being stretched. The fabric is fastened in points which correspond to axes of rotation of the moving arms - riveted joints 5 and push-on joint with a clip 22 to fasten the above to one of the moving arm 1 are used. A surface of the fluorescent fabric 4 is provided with a central notch and it is spaced from the triangle arms at a distance determined in accordance with the requirements of EEC UNO Rules No 27. The triangle base is completed also in accordance with the requirements of the said Rules.

The triangle base is formed by the bar legs 9, which are unfolded to reach the working position by displacement of their free ends on the horizontal and vertical planes, into the outside of the triangle contour. They are at first shifted down on the triangle plane and then - taken aside on the plane which is perpendicular to the triangle plane. During unfolding and working, the stabilized ends of the bar legs 9 are not slipping out from the fastening profiles 8 thanks to flattening of their ends and/or flattening of their fragment close to the opening 23 of the fastening profile 8 and/or thanks to making a notch (offset) in their structure, which is blocked by a blockage (projection) mating with the above and forming a part of the fastening profile. Additionally, the triangle legs 9 are protected against their folding with the projections 24 in the structure of the fastening profiles. The bar legs 9 are provided with the bends 25 along their entire length, which make it possible to lower location of the centre of gravity of the unfolded triangle and to improve this way its protection against falling dawn, e.g. because of a gust of wind. The similar function is performed by the bends 26, which additionally facilitate keeping the folded triangle because they prevent the folded bar legs 9 from sticking out outside the contour of the triangle base.

Dimensions and technical specifications referring to the warning triangle in accordance with the invention meet the requirements determined in the EEC UNO Rules No 27. They also comply with the road traffic law and respectively, the warning triangle can be used as an obligatory equipment of vehicles as required in accordance with the legal regulations in force.

| Number in the figure | Description of triangle elements |
|---|---|
| 1 | Stiffening arms 1 |
| 2 | Horizontal arms 2 |
| 3 | Reflective surfaces |
| 4 | Fluorescent fabric |
| 5 | Riveted joint 5 |
| 6 | Working snap fastener |
| 7 | Openings in fastening profiles |
| 8 | Fastening profiles |
| 9 | Bar legs |
| 10 | Rib of the fastening profile |
| 11 | Notches in fastening profiles |
| 12 | Blocking pin |
| 13 | Pockets for bar legs |
| 14 | Pocket for the stiffening bar |
| 15 | Stiffening bar |
| 16 | Notch in the profile |
| 17 | Blocking pin |
| 18 | Ribs on edges of the horizontal arm and the stiffening profile |
| 19 | Ribbing of the stiffening profile |
| 20 | Horizontal rib of the stiffening profile |
| 21 | Hanger for bar legs |
| 22 | Clip to fasten the fabric |
| 23 | Central opening of the profile |
| 24 | Blocking projections |
| 25 | Bends in bar legs |
| 26 | Bends in bar legs |
| 27 | Stiffening profile |

## Claims

1. The road warning triangle with arms provided with reflective elements, in which at least one surface of such elements has properties of light refraction, **characterized in that** it has one fixed horizontal arm (2) with the fastening profiles (8) situated on both its sides, where two moving arms (1) and four legs (9) of the triangle are fixed rotationally with the application of the known methods; two legs are mounted on each end of the horizontal arm (2), on each side of it and they are put into the openings - pockets (13) made in the profiles (8).

2. The triangle according to the claim 1, **characterized in that** the openings-pockets (13) are situated in a cross-shaped way, at different heights.

3. The triangle according to the claim 1, **characterized in that** the openings-pockets (13) are situated on one plane in such a way, that extensions of longitudinal axes of the bar legs (9) are intersecting at an angle close to right angle.

4. The triangle according to the claim 2 or 3, **characterized in that** the arm (2) is stiffened with two profiles (8) which are joined under the arm (2) with the bar (15).

5. The triangle according to the claim 4, **characterized in that** the stiffening bar (15) has been passed through the hanger (21).

6. The triangle according to the claim 2 or 3, **characterized in that** the arm (2) of the triangle is provided with at least one rib (19), fulfilled uniformly with the arm.

7. The triangle according to the claim 6, **characterized in that** in the inside of the ribbing (19) there is a space filled with a loading or stiffening substance.

8. The triangle according to the claim 2 and 3, **characterized in that** the stiffening profile (27) is placed in parallel to the horizontal arm (2), which fits tight to it.

9. The triangle according to the claim 8, **characterized in that** the profile (27) incorporates the ribbing (19), which is performed in a form of recesses in its structure as well as the rigid rib (20), situated lengthwise the entire stiffening profile (27).

10. The triangle according to the claim 1 or 2 or 3 or 4 or 5 or 6 or 7 or 8 or 9, **characterized in that** the horizontal arm (2) of the triangle base is provided with at least one hanger (21).

11. The triangle according to the claim 1 or 2 or 3 or 4 or 5 or 6 or 7 or 8 or 9, **characterized in that** the hanger (21) is mounted on one bar leg (9).

12. The triangle according to the claim 10 or 11, **characterized in that** the hanger (21) has suspensions forming a kind of shelves, which are open from a side of outer surfaces of the triangle.

13. The triangle according to the 1 or 2 or 3 or 4 or 5 or 6 or 7 or 8 or 9 or 10 or 11 or 12, **characterized in that** the moving arms (1) are fastened rotationally to the horizontal arm (2) with the riveted joint (5).

14. The triangle according to the claim 13, **characterized in that** the profiles (8) are provided with the ribs (10) used to join the arms
(1) and (2) together with the application of the riveted joint (5).

15. The triangle according to the claim 13, **characterized in that** the profile (8) has the notch (11) having a shape matching the blocking pin (12) and that joining between the profile (8) is performed by means of push-on or snap joints and the profiles (8) are stabilized with the notch (11) mating with the pin (12) as well as with the rib (18).

16. The triangle according to the claim 1 or 12 or 13 or 14 or 15, **characterized in that** ends of the legs (9) are provided with snap rings.

17. The triangle according to the claim 1 or 12 or 13 or 14 or 15, **characterized in that** ends of the legs (9) are flattened close to their endings.

18. The triangle according to the claim 1 or 12 or 13 or 14 or 15 or 16 or 17, **characterized in that** the legs (9) are provided with local offset - bend, whereas the profile (8) is provided with a projection, which mates with the latter one.

19. The triangle according to the claim 1 or 12 or 13 or 14 or 15 or 16, **characterized in that** the bar legs (9) are deformed in at least two points, close to the central part of their length and in such a way that these deformations form the bend (26).

20. The triangle according to the claim 1 or 12 or 13 or 14 or 15 or 16 or 17 or 18 or 19, **characterized in that** the bar legs (9) are deformed in at least three points, close to the central part of their length and in such a way that these deformations form the bends (25) and (26).
